# EUROPEAN PATENT APPLICATION

(11) **EP 4 851 803 A1**
(43) Date of publication of application: **09.12.2026**
(21) Application number: 26180344.9
(22) Date of filing: 21.05.2026
(51) Int. Cl.: G06F 9/50, G06F 11/34, H04L 41/0816, H04L 41/0894, H04L 41/0895, H04L 41/0896, G06F 9/455

(54) **INFORMATION PROCESSING DEVICE, NOTIFICATION METHOD, AND INFORMATION PROCESSING SYSTEM**

(30) Priority: 02.06.2025 JP 2025091606
(71) Applicant: Fsas Technologies Inc., Nakahara-ku Kawasaki-shi, Kanagawa 211-0012 (JP)
(72) Inventor: WAKABAYASHI, Hisataka, Kawasaki-shi, 211-0012 (JP)
(74) Representative: Haseltine Lake Kempner LLP

(57) **Abstract**

An information processing device (100) includes an acquisition unit (152) that acquires, regarding a plurality of graphics processing units (GPUs) mounted in a plurality of extension boxes (50a, 50b) connected to each other via a switch, performance information indicating a relationship between the number of GPUs used by a calculation node (10a, 10b, 10c, 10d) in an aggregation period and a time during which the plurality of GPUs used by the calculation node (10a, 10b, 10c, 10d) performs data communication via the switch and performs processing an identification unit (153) that identifies the number of GPUs to be mounted in one extension box based on the performance information and a notification unit (154) that makes a notification of the number of GPUs, the number being identified by the identification unit (153).

## Description

### FIELD

The present invention relates to an information processing device and the like.

### BACKGROUND

There is a technology called a composable disaggregated infrastructure (CDI). The CDI is an architecture in which resources of an information technology (IT) infrastructure such as a graphics processing unit (GPU) are independently managed and configured as individual components and dynamically combined as appropriate, thereby enhancing flexibility and efficiency.

For example, in the CDI, a plurality of calculation nodes is connected to a plurality of peripheral component interconnect (PCI)-BOXes, and a plurality of GPUs stored in each PCI-BOX can be freely combined and used with the calculation nodes. At this time, the GPUs are distributed and stored in each PCI-BOX so that the loads of the respective PCI-BOX are equalized and the number of mounted GPUs is equalized. Note that the number of GPUs that can be mounted in the PCI-BOX has an upper limit, and the communication band between a PCI-BOX and the SW connected to the PCI-BOX has an upper limit.

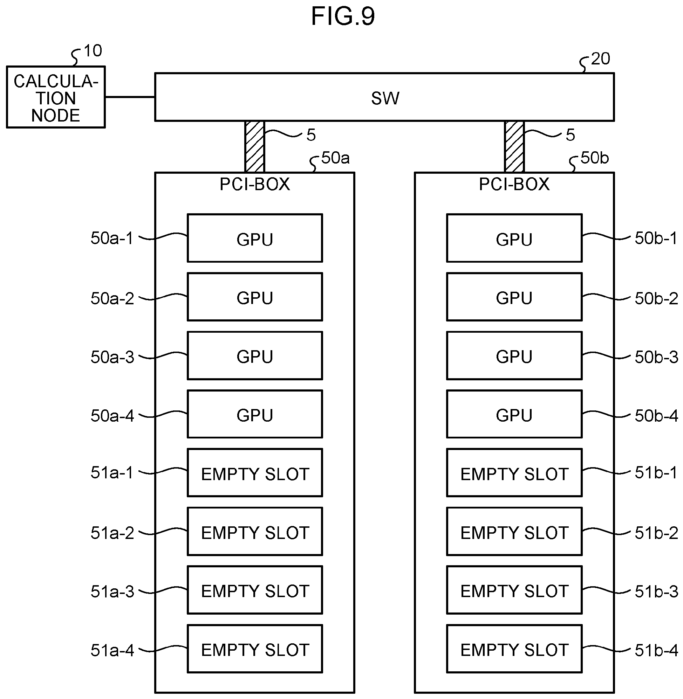

FIG. 9 is a diagram for describing an example of the related art. In the example illustrated in FIG. 9, one calculation node 10 is illustrated. The calculation node 10 is connected to an SW 20. The SW 20 is a PCI-FabricSwitch or the like. The SW 20 is connected to the PCI-BOXes 50a and 50b via a dedicated cable 5. The dedicated cable is a PCI cable or the like.

The GPUs 50a-1, 50a-2, 50a-3, and 50a-4 are mounted in the PCI-BOX 50a. The PCI-BOX 50a includes empty slots 51a-1, 51a-2, 51a-3, and 51a-4. The empty slots 51a-1 to 51a-4 are slots for adding other GPUs and the like.

The GPUs 50b-1, 50b-2, 50b-3, and 50b-4 are mounted in the PCI-BOX 50b. The PCI-BOX 50b includes empty slots 51b-1, 51b-2, 51b-3, and 51b-4. The empty slots 51b-1 to 51b-4 are slots for adding other GPUs and the like.

The calculation node 10 uses the GPUs 50a-1 to 50a-4 of the PCI-BOX 50a and the GPUs 50b-1 to 50b-4 of the PCI-BOX 50b via the SW 20. The number of GPUs used by the calculation node 10 depends on the job executed by the calculation node 10. The GPU that can be used by the calculation node 10 is a GPU that is not used by the other nodes.
Patent Document 1: Japanese Laid-open Patent Publication No. 2024-69960
Patent Document 2: International Publication Pamphlet No. WO 2023/105671
Patent Document 3: International Publication Pamphlet No. WO 2017/013872

However, in the above-described technology in the related art, there is a problem that the processing speed is reduced in a case where the GPUs allocated to the calculation node are present in different PCI-BOXes.

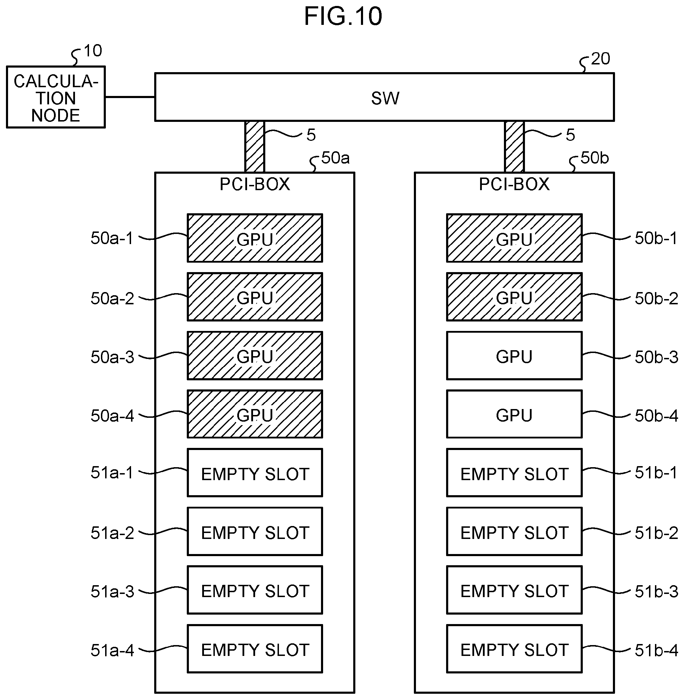

FIG. 10 is a diagram for describing a problem with the related art. For convenience of description, the number of GPUs used for the job executed by the calculation node 10 is set to "6". Then, since the number of GPUs mounted in one PCI-BOX is "4", for example, 50a-1 to 50a-4 of PCI-BOX 50a and 50b-1 and 50b-2 of PCI-BOX 50b are allocated to the calculation node 10.

Here, in a case where the GPUs 50a-1 to 50a-4, 50b-1, and 50b-2 execute a job, data communication is performed between the GPUs. Since data communication between GPUs mounted in different PCI-BOXes is low-speed communication via the SW 20, a latency between GPUs mounted in different PCI-BOXes is higher than a latency between GPUs mounted in the same PCI-BOX. Since the GPU of the PCI-BOX 50a and the GPU of the PCI-BOX 50b are allocated to the calculation node 10, the processing speed of the job executed by the calculation node 10 decreases.

As a simple explanation solution for solving the problem described in FIG. 10, there is a method of mounting six GPUs in one PCI-BOX in advance. However, since it is difficult to predict in advance how many GPUs a calculation node will use and how many calculation nodes will be used, a simple solution is not adopted.

Therefore, even when the number of GPUs used by the calculation node and the use period is not predicted in advance, it is desirable to suppress a decrease in processing speed by proposing an optimal configuration of the GPUs.

In an aspect, an object of the present invention is to provide an information processing device, a notification method, and an information processing system capable of suppressing a decrease in processing speed.

### SUMMARY

According to an aspect of the embodiments, an information processing device includes an acquisition unit

(152) that acquires, regarding a plurality of graphics processing units (GPUs) mounted in a plurality of extension boxes connected to each other via a switch, performance information indicating a relationship between the number of GPUs used by a calculation node in an aggregation period and a time during which the plurality of GPUs used by the calculation node performs data communication via the switch and performs processing, an identification unit (153) that identifies the number of GPUs to be mounted in one extension box based on the performance information and a notification unit that makes a notification of the number of GPUs, the number being identified by the identification unit.

### BRIEF DESCRIPTION OF DRAWINGS

FIG. 1 is a diagram illustrating an example of a CDI system according to the present embodiment;
FIG. 2 is a functional block diagram illustrating a configuration of an information processing device according to the present embodiment;
FIG. 3 is a diagram illustrating an example of a data structure of a performance DB;
FIG. 4 is a diagram illustrating an example of a data structure of aggregated data;
FIG. 5 is a diagram illustrating an example of a data structure of configuration data;
FIG. 6 is a diagram illustrating an example of screen information generated by a notification unit;
FIG. 7 is a flowchart illustrating a processing procedure of the information processing device according to the present embodiment;
FIG. 8 is a diagram illustrating an example of a hardware configuration of a computer that implements functions similar to those of the server of the present embodiment;
FIG. 9 is a diagram for describing an example of the related art; and
FIG. 10 is a diagram for describing a problem with the related art.

### DESCRIPTION OF EMBODIMENTS

Preferred embodiments will be explained with reference to accompanying drawings. Hereinafter, embodiments of an information processing device, a notification method, and an information processing system disclosed in the present application will be described in detail with reference to the drawings. Note that the present invention is not limited by the embodiments. Embodiments

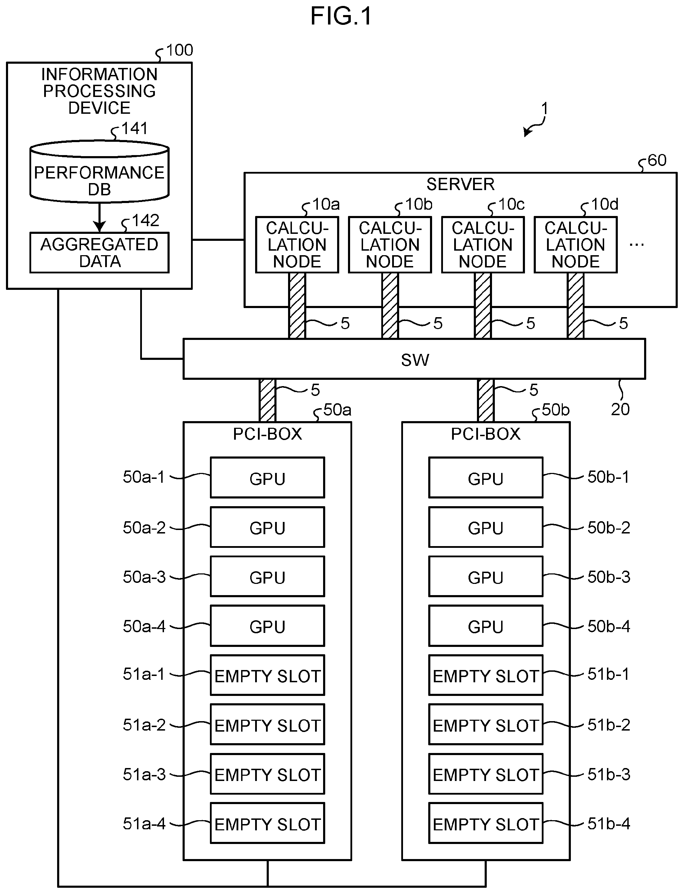

A configuration example of a CDI system according to the present embodiment will be described. FIG. 1 is a diagram illustrating an example of the CDI system according to the present embodiment. As illustrated in FIG. 1, a CDI system 1 includes an SW 20, PCI-BOXes 50a and 50b, a server 60, and an information processing device 100. The CDI system 1 is an example of "an information processing system".

The information processing device 100 and the PCI-BOXes 50a and 50b are connected to each other via a network. The information processing device 100 and the SW 20 are connected to each other via a network. The information processing device 100 and the server 60 are connected to each other via a network.

The SW 20 is a PCI-FabricSwitch or the like. The SW 20 is connected to the PCI-BOXes 50a and 50b by the dedicated cable 5 such as a PCI cable. In addition, the SW 20 is connected to the calculation nodes 10a, 10b, 10c, and 10d of the server 60 by the dedicated cable 5.

A plurality of GPUs is mounted in advance in the PCI-BOXes 50a and 50b. In addition, the PCI-BOXes 50a and 50b include a plurality of empty slots. For example, the GPUs 50a-1 to 50a-4 are mounted in the PCI-BOX 50a. The PCI-BOX 50a includes empty slots 51a-1 to 51a-4. The GPUs 50b-1 to 50b-4 are mounted in the PCI-BOX 50b. The PCI-BOX 50b includes the empty slots 51b-1 to 51b-4. The PCI-BOXes 50a and 50b are an example of "extension boxes".

Although not illustrated, the CDI system 1 may further include a PCI-BOX other than the PCI-BOXes 50a and 50b. In the following description, the GPUs 50a-1 to 50a-4 and 50b-1 to 50b-4 mounted in the PCI-BOXes 50a and 50b may be simply referred to as GPUs. The empty slots 51a-1 to 51a-4 and 51b-1 to 51b-4 of the PCI-BOXes 50a and 50b may be simply referred to as empty slots.

In the server 60, a plurality of calculation nodes operates. Although the present embodiment will be described using the calculation nodes 10a to 10d, calculation nodes other than the calculation nodes 10a to 10d may operate in the server 60.

The calculation nodes 10a to 10d are logically created, used, and logically dismantled by a control command from the information processing device 100. For example, the calculation nodes 10a to 10d are virtual machines (VMs) or the like. In the following description, the calculation nodes 10a to 10d may be collectively referred to as a calculation node 10.

A job is allocated to the calculation node 10. The number of GPUs for executing such a job is designated for the job, and the calculation node 10 executes the job using the designated number of GPUs. The GPU used by the calculation node 10 may be designated by the information processing device 100.

For example, in a case where a job allocated to the calculation node 10a uses 4 GPUs and is designated to use the GPUs 50a-1 to 50a-4, the calculation node 10a executes the job using the GPUs 50a-1 to 50a-4. The calculation node 10a is automatically dismantled when the job is completed.

For example, in a case where the job allocated to the calculation node 10a uses 6 GPUs and is designated to use the GPUs 50a-1 to 50a-4, 50b-1, and 50b-2, the calculation node 10a executes the job using the GPUs 50a-1 to 50a-4, 50b-1, and 50b-2. The calculation node 10a is automatically dismantled when the job is completed.

The information processing device 100 outputs a control command to the server 60 to logically create the calculation node 10. The information processing device 100 gives a job to the calculation node 10 and designates the number of GPUs to be used and the GPUs to be used. For example, in a case of creating a new calculation node, the information processing device 100 designates a GPU to be used in a case where the new calculation node 10 executes a job from unused GPUs among the GPUs of the PCI-BOXes 50a and 50b.

Here, the information processing device 100 monitors the usage status of the GPUs of the PCI-BOXes 50a and 50b, the GPUs being used by the calculation node 10, and records information serving as a monitoring result in a performance DB 141. For example, a relationship between "the number of GPUs used by the calculation node 10" and "the time during which the plurality of GPUs used by the calculation node 10 performs data communication via the SW 20 and performs processing" is recorded in the performance DB 141. Hereinafter, the time during which a plurality of GPUs used by the calculation node 10 performs data communication via the SW 20 and performs processing is referred to as "the time in communication via the SW".

The information processing device 100 generates aggregated data 142 by calculating the ratio of the time in communication via the SW to the aggregation period for each number of GPUs based on the performance DB 141. Hereinafter, the ratio of the time in communication via the SW to the aggregation period is referred to as "the ratio in communication via the SW".

The information processing device 100 identifies, as the number of GPUs to be mounted in one PCI-BOX 50a (or 50b), the number of GPUs having a predetermined ratio or more designated in advance in the ratio in communication via the SW calculated based on the aggregated data 142.

For example, in a case where the number of GPUs having a predetermined ratio or more designated in advance in the ratio in communication via the SW calculated based on the aggregated data 142 is "6", the information processing device 100 displays information indicating that the number of GPUs mounted in one PCI-BOX 50a (or 50b) is set to 6.

For example, the user who has referred to the information sets the number of GPUs mounted in the PCI-BOX 50a to "6" by additionally mounting two new GPUs in the empty slots 51a-1 and 50a-1 of the PCI-BOX 50a. As a result, it is possible to suppress the occurrence of data communication between the GPUs via the SW 20, the data communication occurring at a ratio equal to or greater than the predetermined ratio, and it is possible to improve the processing speed.

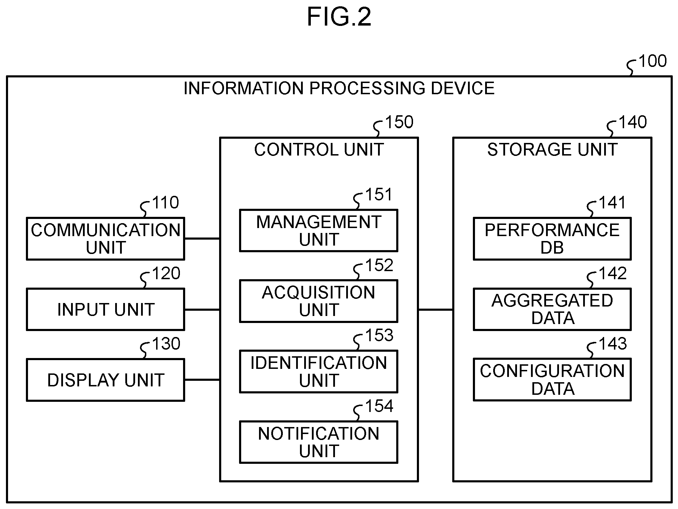

Next, a configuration example of the information processing device 100 illustrated in FIG. 1 will be described. FIG. 2 is a functional block diagram illustrating a configuration of the information processing device according to the present embodiment. As illustrated in FIG. 2, the information processing device 100 includes a communication unit 110, an input unit 120, a display unit 130, a storage unit 140, and a control unit 150.

The communication unit 110 executes data communication with the SW 20, the PCI-BOXes 50a and 50b, and the server 60. The control unit 150 described later executes data communication with the SW 20, the PCI-BOXes 50a and 50b, and the server 60 via the communication unit 110.

The input unit 120 inputs various types of information to the information processing device 100. For example, the user operates the input unit 120 to input information about the aggregation period, the predetermined ratio, and the like. Furthermore, the user may set configuration data 143 by operating the input unit 120.

The display unit 130 displays information output from the control unit 150. For example, the display unit 130 may display information related to the number of GPUs mounted in one PCI-BOXes 50a (or 50b).

The storage unit 140 includes the performance DB 141, the aggregated data 142, and the configuration data 143. The storage unit 140 is a memory or the like.

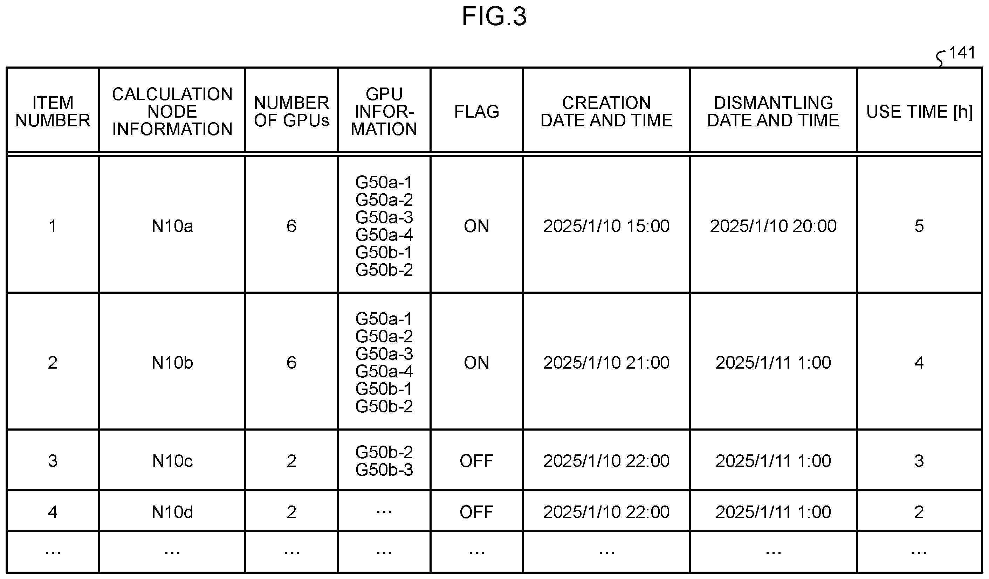

The performance DB 141 records information that is the monitoring result of the usage status of the GPUs of the PCI-BOXes 50a and 50b, the GPUs being used by the calculation node 10. FIG. 3 is a diagram illustrating an example of a data structure of the performance DB. As illustrated in FIG. 3, the performance DB 141 includes an item number, calculation node information, the number of GPUs, GPU information, a flag, a creation date and time, a dismantling date and time, and a use time. The information in the performance DB 141 corresponds to "performance information".

The item number is an item number of a record in the performance DB 141. The calculation node information is information for identifying the calculation node 10. For example, information for identifying the calculation nodes 10a, 10b, 10c, and 10d is assumed as N10a, N10b, N10c, and N10d.

The number of GPUs indicates the number of GPUs used by the calculation node 10. The GPU information is information for identifying the GPU used by the calculation node 10. For example, the information for identifying the GPUs 50a-1, 50a-2, 50a-3, and 50a-4 is set as G50a-1, G50a-2, G50a-3, and G50a-4. Information for identifying the GPUs 50b-1, 50b-2, 50b-3, and 50b-4 is set as G50b-1, G50b-2, G50b-3, and G50b-4.

The flag is a flag indicating whether data communication via the SW 20 has been performed between the GPUs when the calculation node 10 executes a job using the GPU. In a case where data communication via the SW 20 is performed between the GPUs, the flag is set to "ON". On the other hand, in a case where data communication via the SW 20 is not performed between the GPUs, the flag is set to "OFF".

The creation date and time indicates the date and time when the calculation node 10 is created. The dismantling date and time indicates the date and time when the calculation node 10 is dismantled. The use time is the time during which the calculation node 10 used the GPU.

For example, the item number "1" of the performance DB 141 indicates that the calculation node 10a uses the six GPUs 50a-1 to 50a-4, 50b-1, and 50b-2, data communication via the SW 20 is performed between the GPUs, and the use time is "5h". In addition, it is indicated that the creation date and time of the calculation node 10a is "15:00 on January 10, 2025" and the dismantling date and time is "20:00 on January 10, 2025".

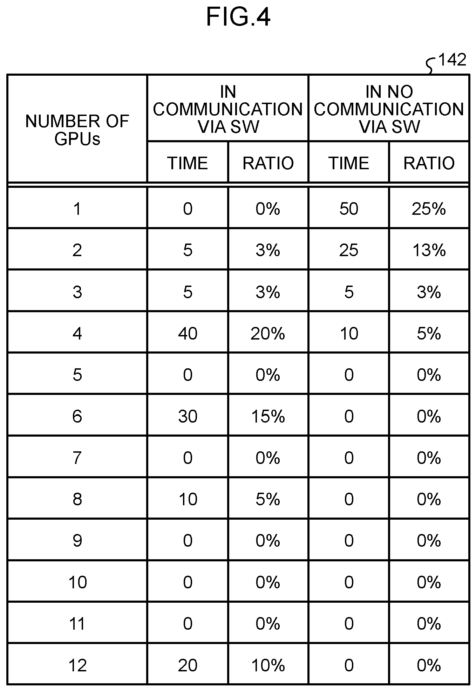

The aggregated data 142 is data generated based on the above-described performance DB 141. FIG. 4 is a diagram illustrating an example of a data structure of aggregated data. As illustrated in FIG. 4, in the aggregated data 142, the number of GPUs, the time and the ratio in communication via the SW, and the time and the ratio in no communication via the SW are set. The number of GPUs indicates the number of GPUs used by the calculation node 10.

The time and the ratio in communication via the SW indicate the time in communication via the SW and the ratio in communication via the SW. When the predetermined time is H1 and the time in communication via the SW is H2, the ratio in communication via the SW is H2/H1×100.

The time and the ratio in communication via the SW indicate the time and the ratio when processing is performed without performing data communication via the SW 20 between GPUs. In the following description, the time during which processing is performed without performing data communication via the SW 20 between the GPUs is referred to as "the time in no communication via the SW". The ratio when processing is performed without data communication via the SW 20 between the GPUs is referred to as "the ratio in no communication via the SW". For example, when the predetermined time is H1 and the time in no communication via the SW is H3, the ratio in no communication via the SW is H3/H1×100.

For example, in a case where the number of GPUs is "1", the time and the ratio in communication via the SW are "0h" and "0%", and the time and the ratio in no communication via the SW are "50h" and "25%".

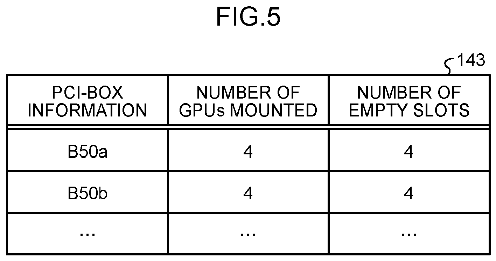

The configuration data 143 holds information related to the number of GPUs mounted in the PCI-BOXes 50a and 50b. FIG. 5 is a diagram illustrating an example of a data structure of configuration data. As illustrated in FIG. 5, the configuration data 143 includes PCI-BOX information, the number of GPUs mounted, and the number of empty slots. The PCI-BOX information is information for identifying the PCI-BOX. For example, information for identifying the PCI-BOXes 50a and 50b is set as B50a and B50b. The number of GPUs mounted is the number of GPUs mounted in the PCI-BOX. The number of empty slots is the number of empty slots in the PCI-BOX.

For example, the configuration data of FIG. 5 indicates that the number of GPUs mounted in the PCI-BOX 50a is "4" and the number of empty slots is "4". Further, it is indicated that the number of GPUs mounted in the PCI-BOX 50a is "4" and the number of empty slots is "4".

The control unit 150 includes a management unit 151, an acquisition unit 152, an identification unit 153, and a notification unit 154. The control unit 150 is a central processing unit (CPU), a GPU, or the like.

The management unit 151 manages the calculation node 10 operated in the server 60. For example, the management unit 151 outputs a control command to the server 60 to logically create the calculation node 10. The management unit 151 gives a job to the calculation node 10 and designates the number of GPUs to be used and the GPUs to be used. For example, in a case of creating a new calculation node, the management unit 151 performs data communication with the PCI-BOXes 50a and 50b, and designates a GPU to be used in a case where the new calculation node 10 executes a job from unused GPUs among the GPUs of the PCI-BOXes 50a and 50b.

In addition, the management unit 151 monitors the usage status of the GPUs of the PCI-BOXes 50a and 50b, the GPUs being used by the calculation node 10, and records information serving as a monitoring result in the performance DB 141. The management unit 151 monitors a plurality of GPUs used by the calculation node 10, and in a case where data communication via the SW 20 is performed, records ON in the flag of the performance DB 141, measures the use time, and records the use time. On the other hand, the management unit 151 monitors a plurality of GPUs used by the calculation node 10, and in a case where data communication via the SW 20 is not performed, records OFF in the flag of the performance DB 141, measures the use time, and records the use time.

The acquisition unit 152 acquires information (record) included in the aggregation period designated by the user via the input unit 120 from the performance DB 141, and outputs the acquired information to the identification unit 153. For example, the acquisition unit 152 may acquire a record in which a set of the creation date and time and the dismantling date and time is included in the aggregation period among a plurality of records of the performance DB 141.

The identification unit 153 sequentially executes a process of generating the aggregated data 142 and a process of identifying the number of GPUs mounted in one PCI-BOX.

The process in which the identification unit 153 generates the aggregated data 142 will be described. Based on the information acquired from the acquisition unit 152, the identification unit 153 calculates the number of CPUs, the time and the ratio in communication via the SW, and the time and the ratio in no communication via the SW, and generates the aggregated data 142.

For example, the identification unit 153 calculates the time in communication via the SW by summing the use time of the records in which the flag is set to ON in the information acquired from the acquisition unit 152. Assuming that the predetermined time is H1 and the time in communication via the SW is H2, the identification unit 153 calculates the ratio in communication via the SW by H2/H1×100.

The identification unit 153 calculates the time in no communication via the SW by summing the use time of the record in which the flag is set to OFF. When the predetermined time is H1 and the time in no communication via the SW is H3, the identification unit 153 calculates the ratio in no communication via the SW by H3/H1×100.

Next, a process in which the identification unit 153 identifies the number of GPUs mounted in one PCI-BOX will be described. The identification unit 153 scans the ratio in communication via the SW of the aggregated data 142, and identifies the number of GPUs having a predetermined ratio or more designated by the user.

For example, in the aggregated data 142 described with reference to FIG. 4, when the predetermined ratio is "15%", the identification unit 153 identifies the number of GPUs, "4", in which the ratio is "20%" and the number of GPUs, "6", in which the ratio is "15%". The number of GPUs identified by the identification unit 153 is referred to as "an identification number". The identification unit 153 outputs the information of the identification number to the notification unit 154.

In a case where the number of GPUs mounted in the PCI-BOX is less than the identification number based on the identification number acquired from the identification unit 153 and the configuration data 143, the notification unit 154 generates screen information for making a notification that the number of GPUs corresponding to the identification number is to be mounted in the PCI-BOX, outputs the screen information to the display unit 130, and displays the screen information. In the following description, the notification unit 154 will be described with the identification numbers being "4" and "6".

For example, the notification unit 154 determines whether the number of GPUs mounted in the PCI-BOX 50a or the number of GPUs mounted in the PCI-BOX 50b is equal to or larger than the identification number based on the identification numbers "4" and "6" and the configuration data 143, and generates the screen information based on the determination result.

The notification unit 154 compares the identification number "4" with the configuration data 143, and the number of GPUs mounted in the PCI-BOX 50a or 50b is "4", which is equal to or larger than the identification number. In this case, the notification unit 154 determines not to generate the screen information corresponding to the identification number "4".

The notification unit 154 compares the identification number "6" with the configuration data 143, and the number of GPUs mounted in the PCI-BOX 50a or 50b is "4", which is less than the identification number. In this case, the notification unit 154 generates screen information suggesting setting the number of GPUs mounted in the PCI-BOX 50a or the PCI-BOX 50a to "6", and outputs and displays the screen information to the display unit 130. The notification unit 154 may generate screen information for making a notification of the number of GPUs to be added.

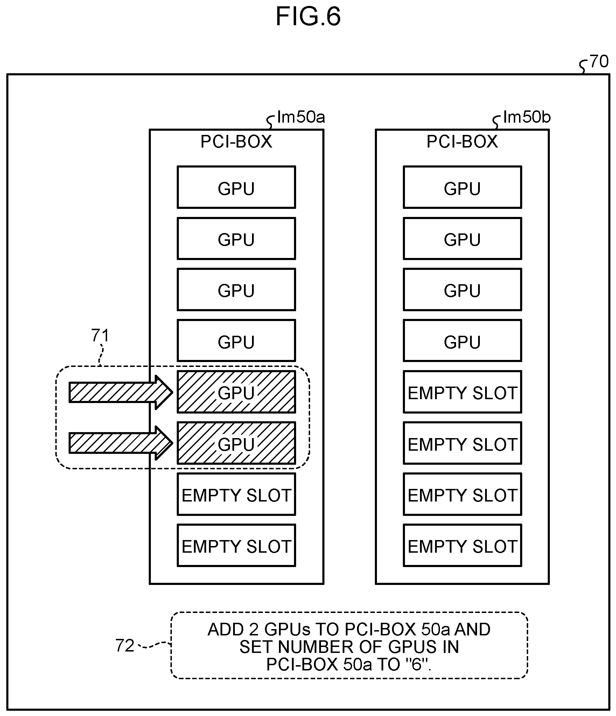

FIG. 6 is a diagram illustrating an example of screen information generated by the notification unit. In the example illustrated in FIG. 6, screen information 70 indicates an image Im50a of the PCI-BOX corresponding to the PCI-BOX 50a and an image Im50b of the PCI-BOX corresponding to the PCI-BOX 50b, and the image Im50a indicates an image 71 visually indicating addition of two GPUs. Further, the screen information 70 indicates a message 72. The message 72 indicates "add 2 GPUs to the PCI-BOX 50a and set the number of GPUs in PCI-BOX 50a to "6"" or the like.

The notification unit 154 may update the configuration data 143 in accordance with the addition of the GPU after displaying the screen information 70 on the display unit 130. For example, the notification unit 154 updates the number of GPUs mounted corresponding to B50a of the configuration data 143 described in FIG. 5 from "4" to "6", and updates the number of empty slots from "4" to "2".

In a case where the number of GPUs mounted in the PCI-BOX is equal to or larger than the identification number for any identification number acquired from the identification unit 153, the notification unit 154 generates screen information indicating that the number of GPUs mounted in the PCI-BOXes 50a and 50b is optimal, and displays the screen information on the display unit 130.

Next, an example of a processing procedure of the information processing device 100 according to the present embodiment will be described. Note that, although not described in the following processing procedure, it is assumed that the management unit 151 of the information processing device 100 continuously performs a process of monitoring the usage status of the GPUs of the PCI-BOXes 50a and 50b, the GPUs being used by the calculation node 10, and recording information serving as a monitoring result in the performance DB 141.

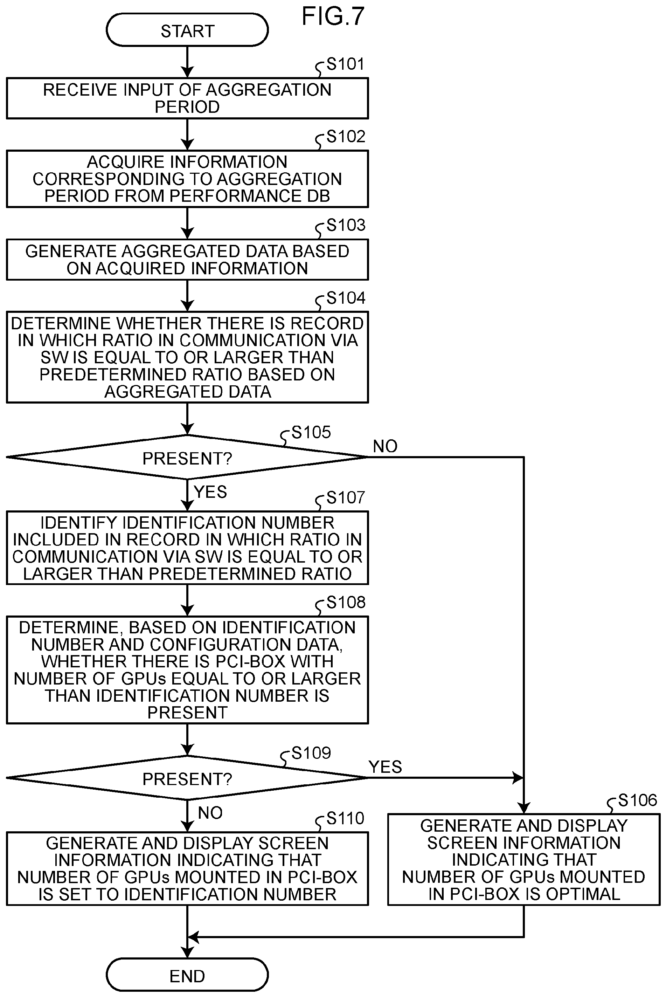

FIG. 7 is a flowchart illustrating a processing procedure of the information processing device according to the present embodiment. For example, the processing illustrated in FIG. 7 is executed every time the input of the aggregation period is received. As illustrated in FIG. 7, the acquisition unit 152 of the information processing device 100 receives an input of the aggregation period (Step S101). The acquisition unit 152 acquires information corresponding to the aggregation period from the performance DB 141 (Step S102).

The identification unit 153 of the information processing device 100 generates the aggregated data 142 based on the information acquired by the acquisition unit 152 (Step S103). Based on the aggregated data 142, the identification unit 153 determines whether there is a record in which the ratio in communication via the SW is equal to or larger than a predetermined ratio (Step S104).

In a case where there is no record in which the ratio in communication via the SW is equal to or larger than the predetermined ratio (Step S105, No), the identification unit 153 advances the process to Step S106. The notification unit 154 of the information processing device 100 generates screen information indicating that the number of GPUs mounted in the PCI-BOXes 50a and 50b is optimal, and displays the screen information on the display unit 130 (Step S106).

On the other hand, in a case where there is a record in which the ratio in communication via the SW is equal to or larger than the predetermined ratio (Step S105, Yes), the identification unit 153 identifies the identification number (the number of GPUs) included in the record in which the ratio in communication via the SW is the predetermined ratio or more (Step S107).

The notification unit 154 determines, based on the identification number and the configuration data 143, whether there is a PCI-BOX having the number of GPUs equal to or larger than the identification number (Step S108). In a case where there is a PCI-BOX having the number of GPUs equal to or larger than the identification number (Step S109, Yes), the notification unit 154 advances the process to Step S106.

On the other hand, in a case where there is no PCI-BOX having the number of GPUs equal to or larger than the identification number (Step S109, No), the notification unit 154 advances the process to Step S110. The notification unit 154 generates screen information indicating that the number of GPUs mounted in the PCI-BOX is set to the identification number, and displays the screen information on the display unit 130 (Step S110). For example, the display unit 130 displays the screen information 70 illustrated in FIG. 6 in Step S110.

Next, effects of the information processing device 100 according to the present embodiment will be described. With respect to the PCI-BOXes 50a and 50b connected to each other via the SW 20, the information processing device 100 acquires information indicating a relationship between the number of GPUs used by the calculation node 10 in the aggregation period and the time when a plurality of GPUs performs data communication via the SW and performs processing, identifies the number of GPUs to be mounted in one PCI-BOX based on the acquired information, and makes a notification of the number of identified GPUs. As a result, it is possible to suppress the occurrence of data communication between the GPUs via the SW 20, the data communication occurring at a ratio equal to or greater than the predetermined ratio, and it is possible to improve the processing speed.

The information processing device 100 calculates a ratio of the time to the aggregation period for each number of GPUs based on the performance DB 141, and identifies the number of GPUs having a predetermined ratio or more among the calculated ratios as the number of GPUs to be mounted in one extension box. As a result, it is possible to identify the number of GPUs with a high ratio of occurrence of data communication between the GPUs via the SW 20.

The information processing device 100 compares the identification number with the number of GPUs mounted in each of the PCI-BOXes 50a and 50b, and makes a notification of the identification number in a case where the identification number is larger than the number of GPUs mounted in any of the PCI-BOXes. As a result, it is possible to make a notification of the number of GPUs for suppressing the occurrence of data communication between the GPUs via the SW 20, the data communication occurring at a ratio equal to or greater than the predetermined ratio.

In a case where the identification number is output to the display unit 130, the information processing device 100 configures the configuration data 143 by the identification number. As a result, it is possible to continuously determine whether the number of GPUs mounted in the PCI-BOXes 50a and 50b is optimal even in the processing after the identification number is notified.

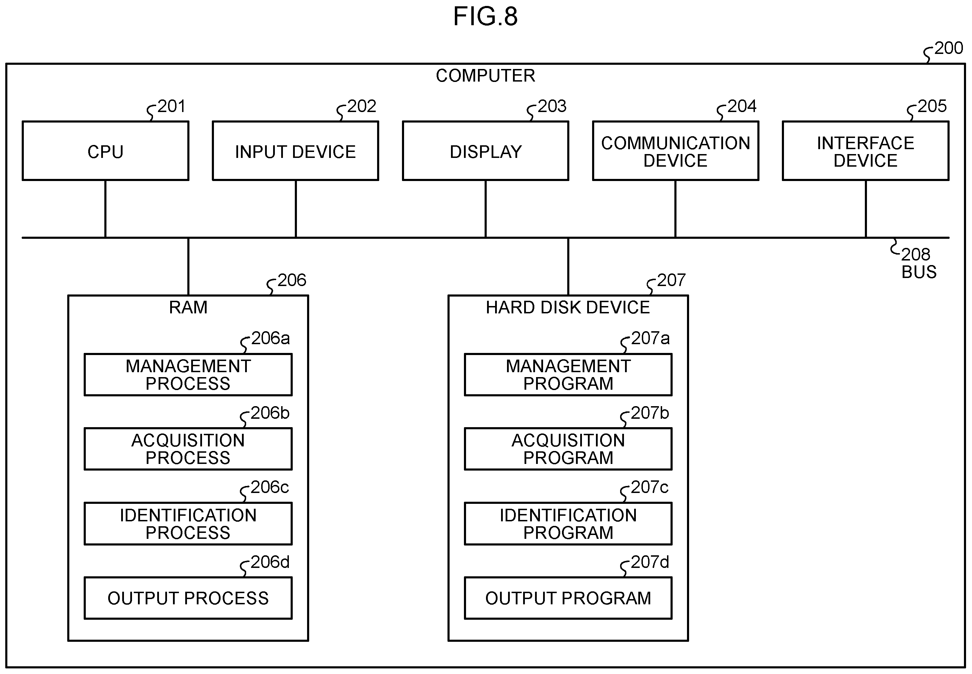

Next, an example of a hardware configuration of a computer that implements functions similar to those of the information processing device 100 described above will be described. FIG. 8 is a diagram illustrating an example of a hardware configuration of a computer that implements functions similar to those of the server of the present embodiment. As illustrated in FIG. 8, a computer 200 includes a CPU 201 that executes various types of arithmetic processing, an input device 202 that receives an input of data from a user, and a display 203. Furthermore, the computer 200 includes a communication device 204 that exchanges data with the SW 20, the PCI-BOXes 50a and 50b, the server 60, another external device, and the like via a wired or wireless network, and an interface device 205. In addition, the computer 200 includes a RAM 206 that temporarily stores various types of information and a hard disk device 207. Each device 201 to 207 is connected to a bus 208.

The hard disk device 207 includes a management program 207a, an acquisition program 207b, an identification program 207c, and an output program 207d. In addition, the CPU 201 reads the programs 207a to 207d and loads the programs in the RAM 206.

The management program 207a functions as a management process 206a. The acquisition program 207b functions as an acquisition process 206b. The identification program 207c functions as an identification process 206c. The output program 207d functions as an output process 206d.

The process of the management process 206a corresponds to the process of the management unit 151. The process of the acquisition process 206b corresponds to the process of the acquisition unit 152. The process of the identification process 206c corresponds to the process of the identification unit 153. The process of the output process 206d corresponds to the process of the notification unit 154.

The programs 207a to 207d do not necessarily need to be stored in the hard disk device 207 from the beginning. For example, each program is stored in "a portable physical medium" such as a flexible disk (FD), a CD-ROM, a DVD, a magneto-optical disk, or an IC card, the portable physical medium being inserted into the computer 200. Then, the computer 200 may read and execute the programs 207a to 207d.

A decrease in the processing speed can be suppressed.

## Claims

1. An information processing device (100) comprising:
an acquisition unit (152) that acquires, regarding a plurality of graphics processing units (GPUs) mounted in a plurality of extension boxes (50a, 50b) connected to each other via a switch, performance information indicating a relationship between the number of GPUs used by a calculation node (10a, 10b, 10c, 10d) in an aggregation period and a time during which the plurality of GPUs used by the calculation node (10a, 10b, 10c, 10d) performs data communication via the switch and performs processing;
an identification unit (153) that identifies the number of GPUs to be mounted in one extension box based on the performance information; and
a notification unit (154) that makes a notification of the number of GPUs, the number being identified by the identification unit (153).

2. The information processing device (100) according to claim 1, wherein the identification unit (153) calculates a ratio of the time to the aggregation period for each number of GPUs based on the performance information, and identifies the number of GPUs having a predetermined ratio or more in the calculated ratio as the number of GPUs mounted in the one extension box.

3. The information processing device (100) according to claim 2, wherein the notification unit (154) compares the identified number of GPUs with the number of GPUs mounted in the plurality of extension boxes (50a, 50b), and makes a notification of the identified number of GPUs in a case where the identified number of GPUs is larger than the number of GPUs mounted in any of the extension boxes (50a, 50b).

4. The information processing device (100) according to claim 3, further comprising a storage unit (140) that stores configuration data indicating the number of GPUs mounted in the plurality of extension boxes (50a, 50b), wherein the notification unit (154) further performs processing of updating the configuration data based on a result of the notification.

5. A notification method carried out by a computer (200), comprising:
acquiring, regarding a plurality of graphics processing units (GPUs) mounted in a plurality of extension boxes (50a, 50b) connected to each other via a switch, performance information indicating a relationship between the number of GPUs used by a calculation node (10a, 10b, 10c, 10d) in an aggregation period and a time during which the plurality of GPUs used by the calculation node (10a, 10b, 10c, 10d) performs data communication via the switch and performs processing;
identifying the number of GPUs to be mounted in one extension box based on the performance information; and
making a notification of the identified number of GPUs.

6. An information processing system (1) comprising: a plurality of extension boxes (50a, 50b) in which a plurality of graphics processing units (GPUs) is mounted and that is connected to each other via a switch (20) ; a calculation node (10a, 10b, 10c, 10d) that uses the plurality of GPUs; and an information processing device (100), wherein
the information processing device (100) comprises
an acquisition unit (152) that acquires, regarding a plurality of GPUs mounted in the plurality of extension boxes (50a, 50b), performance information indicating a relationship between the number of GPUs used by a calculation node (10a, 10b, 10c, 10d) in an aggregation period and a time during which the plurality of GPUs used by the calculation node (10a, 10b, 10c, 10d) performs data communication via the switch and performs processing,
an identification unit (153) that identifies the number of GPUs to be mounted in one extension box based on the performance information, and
a notification unit (154) that makes a notification of the number of GPUs, the number being identified by the identification unit (153).
